Europäisches Patentamt

European Patent Office

Office européen des brevets

(11) Numéro de publication : **0 487 402 A1**

# (12) DEMANDE DE BREVET EUROPEEN

(21) Numéro de dépôt : **91403102.6**

(22) Date de dépôt : **19.11.91**

(51) Int. Cl.$^5$ : **G01N 21/90,** G06F 15/62

(30) Priorité : **20.11.90 FR 9014419**

(43) Date de publication de la demande :
**27.05.92 Bulletin 92/22**

(84) Etats contractants désignés :
**AT BE CH DE DK ES FR GB GR IT LI LU NL SE**

(71) Demandeur : **SAINT-GOBAIN CINEMATIQUE
ET CONTROLE
56, 60 Avenue du Vieux chemin de St-Denis
F-92230 Gennevilliers (FR)**

(72) Inventeur : **Flotterer, Philippe
28, rue Samson
F-93200 Saint-Denis (FR)**

(74) Mandataire : **Eudes, Marcel
Saint-Gobain Recherche 39 Quai Lucien
Lefranc
F-93304 Aubervilliers Cedex (FR)**

(54) **Contrôle optique au vol.**

(57)    L'invention a pour objet une machine de contrôle d'objets en mouvement munis d'un repère angulaire, associant le long d'un transporteur un dispositif optoélectronique comprenant un émetteur et un récepteur travaillant en coordonnées cartésiennes rectangulaires suivi d'un analyseur d'images, asservie à un microcalculateur et équipée d'un convertisseur électronique (10) apte à restituer en position fixe devant la grille d'analyse cartésienne de l'analyseur (9) toute image instantanée obtenue sur le récepteur (4).

Cette machine, utilisable en particulier dans l'industrie du verre creux, permet en particulier de contrôler des fonds de récipients en temps réel, à très haute cadence, sur les lignes de fabrication.

Fig. 4

EP 0 487 402 A1

Le contrôle optique d'objets fabriqués en grande série en vue aussi bien d'en décider l'acceptation ou le rejet que de surveiller le niveau de qualité général d'une fabrication enveloppe certains contrôles dimensionnels mais surtout des contrôles d'aspect ; ceux-ci révéleront l'état de surface et plus précisément ses anomalies et même, pour les objets transparents, voire translucides, d'éventuels défauts internes.

C'est pourquoi ce contrôle est très employé dans l'industrie du verre et en particulier du verre creux, soit pour l'inspection fine de zones délimitées susceptibles de porter des défauts spécifiques, notamment des glaçures, et l'on recourt alors volontiers à des faisceaux lumineux orientés, plus ou moins étroits, soit sur la plus grande partie possible de la paroi pour la détection de défauts plus variés : inclusions, défauts de pâte, d'épaisseur, adhérences ... Il faut dans ce cas étudier une image de l'objet en déplacement avec ou sans rotation, formée le plus souvent par transparence en éclairage diffus.

Il est alors nécessaire d'analyser en temps réel donc à très haute cadence le signal fourni par un dispositif optoélectronique placé le long d'un transporteur et associant à un émetteur adéquat un récepteur travaillant en coordonnées cartésiennes rectangulaires, donc souvent désormais construit autour d'une caméra matricielle (CCD : charge coupled device) équipée d'un réseau de cellules saisissant une image globale quasi instantanée. Cette image n'est à priori pas uniforme, même sur un objet sans défauts et, quelle que soit la méthode d'analyse choisie, devra, si l'on veut en tirer des informations suffisantes, être comparée par des organes d'analyse de l'image puis de décision à un modèle constitué par une table de critères déduite de l'expérience. L'ensemble est asservi à un microcalculateur.

Une des difficultés est alors que plus la cadence de contrôle s'accélère, plus il devient difficile de manipuler les objets. Une solution répandue consiste à transporter ceux-ci debout sur des convoyeurs à tablier horizontal, généralement rectilignes, avec l'aide de courroies latérales pour les placer, au besoin en les faisant tourner s'il s'agit de bouteilles circulaires. Mais il reste difficile d'observer l'image dans une position uniforme, même en synchronisant son acquisition sur le passage de l'objet.

L'invention se fixe alors pour premier objectif de fournir des machines de contrôle optique équipées d'un dispositif apte à restituer en position fixe, devant une grille d'analyse cartésienne, chaque image instantanée d'un objet muni d'un repère angulaire adéquat et placé sur le transporteur, obtenue en position variable sur leur récepteur. Elle vise donc à proposer pour ces machines un dispositif convertisseur électronique d'application générale, apte, par insertion entre la caméra et l'analyseur, à transposer en temps réel à des cadences de 36 000 articles à l'heure et plus le signal électronique numérisé issu de cette caméra :

ce dispositif sera capable au minimum de recaler chaque image en une fraction du temps de lecture vidéo, non seulement en translation dans la direction du convoyeur mais au moins aussi en translation perpendiculaire et en rotation à partir de la détection de sa silhouette et de la position du repère.

Recevant ses données de la caméra pour les transmettre à l'analyseur d'image, le convertisseur caractéristique de l'invention groupe, en liaison avec l'unité centrale de calcul qui pilote la machine et les circuits de l'analyseur, plusieurs unités spécialisées, à savoir une unité de localisation, une unité graphique, une unité de transposition, qui seront décrites ci-dessous à travers leurs fonctions principales respectives dans le cadre du contrôle du fond d'un récipient en verre.

Cet exemple, choisi par mesure de clarté, sera accompagné d'indications sur quelques transpositions faciles à d'autres cas. Les dessins auxquels sa description se réfère montrent schématiquement :
  – figure 1, la structure possible d'un poste de contrôle,
  – figure 2, l'image reçue sur la caméra,
  – figure 3, la forme des signaux de lignes,
  – figure 4, un organigramme de fonctionnement,
  – figure 5, l'image stockée par la mémoire initiale,
  – figure 6, l'image type d'une bouteille sans défaut.

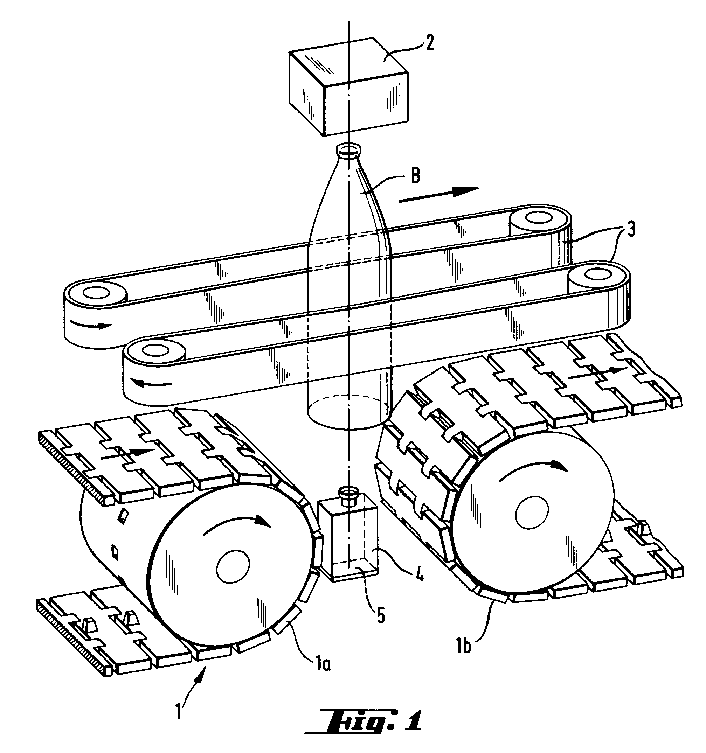

Usuellement, comme le montre la figure 1 mais sans obligation absolue à cet égard, on ménage entre deux tronçons successifs 1a, 1b d'un convoyeur à tablier horizontal 1, sous un émetteur lumineux 2, un intervalle couvert par deux courroies latérales antagonistes 3 ; l'image du fond, obtenue par observation selon l'axe vertical, de chacun des récipients B, des bouteilles entraînées en translation à intervalles aussi faibles que possible par ces deux courroies, se forme sur la surface sensible d'une caméra 4, commodément constituée par exemple d'un réseau 5 à 384x288 mailles carrées, dont le champ utile E est disposé en longueur dans la direction du convoyeur.

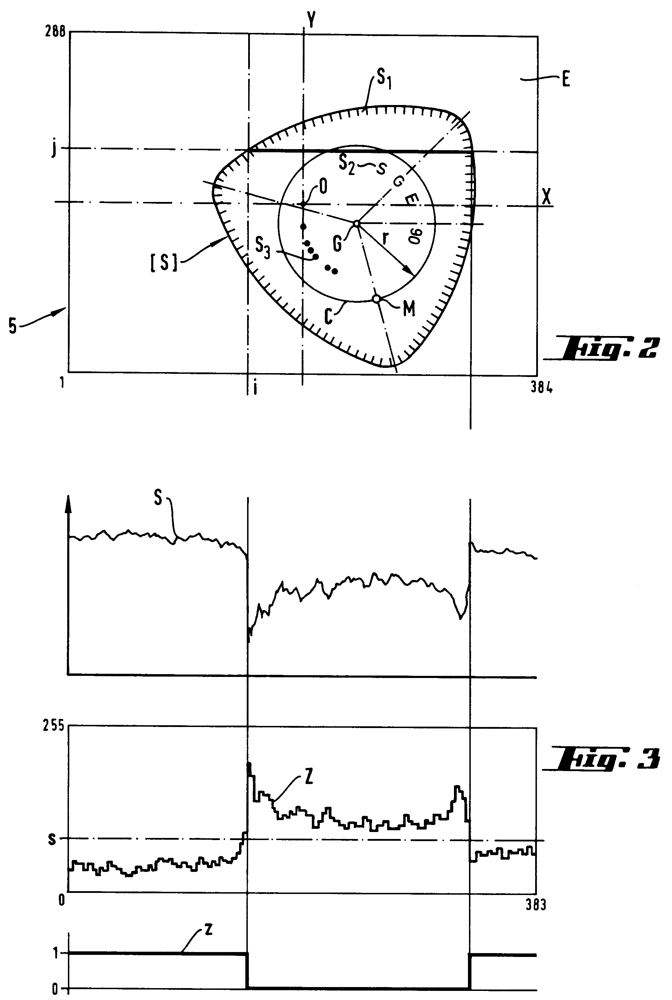

Qu'elle soit circulaire ou non, directe ou indirecte, et même fournie par le fond "plat" (en vérité peu concave) d'une bouteille sans défauts, cette image [S], schématisée sur la figure 2, ne présente pas une luminosité uniforme : il peut exister non seulement des différences d'épaisseur ou d'éclairement mais aussi des perturbations systématiques, zones $S_1$ de nervuration destinée au refroidissement du talon, $S_2$, $S_3$ d'écriture en clair ou codée : usine, numéro de moule ..., repère M d'orientation, par exemple pour le collage des étiquettes etc. ; ces diverses zones exigent des critères de sévérité et même des traitements différents.

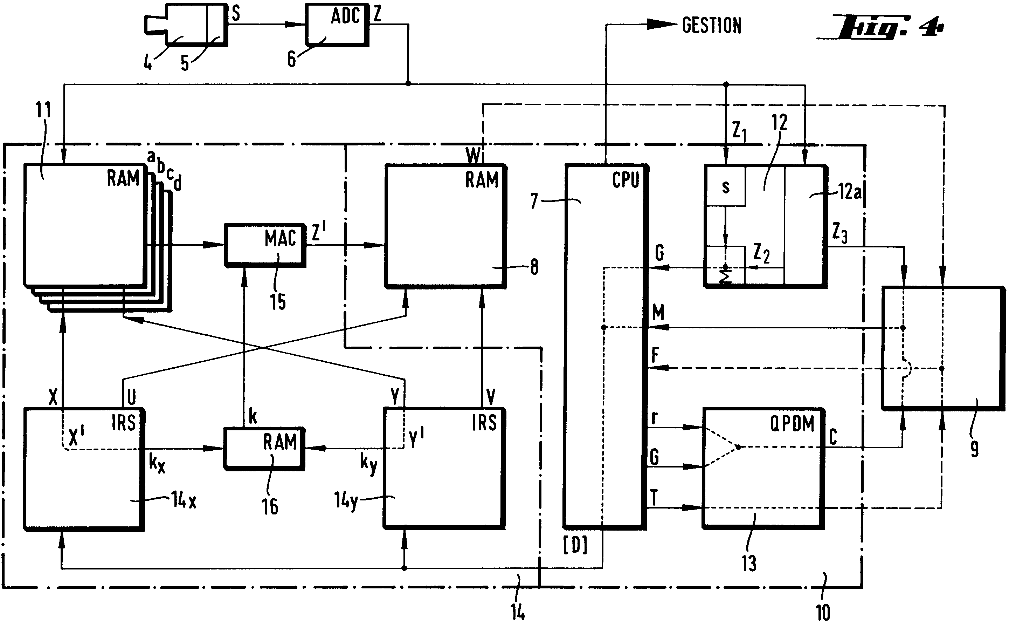

Comme le montre d'abord la figure 3, le signal vidéo S fourni ligne après ligne par la caméra est d'abord numérisé par un convertisseur (ADC = analogic-digital converter) en une série de digits Z à $2^8 =$

256 niveaux de gris, traduisant les éclairements moyens de chaque maille, usuellement adressés dans une mémoire cible pour alimenter un analyseur adéquat comparant l'image obtenue à la table de critères définie par le protocole de contrôle, cette dernière pouvant être assimilée à une image type.

D'autre part l'image se présente en principe sous une dimension constante car elle est prise à distances fixes sur le dispositif optique, mais sera saisie sur le réseau 5 dans une position quelque peu variable à l'intérieur du champ disponible E ; en outre, même si elle n'est pas circulaire, la bouteille se présente a priori en orientation inconnue. C'est cette double difficulté qu'il faut vaincre pour comparer son image à la grille d'analyse que forme le modèle, si l'on veut éviter par exemple que toute marque locale ne neutralise toute une couronne sur le fond.

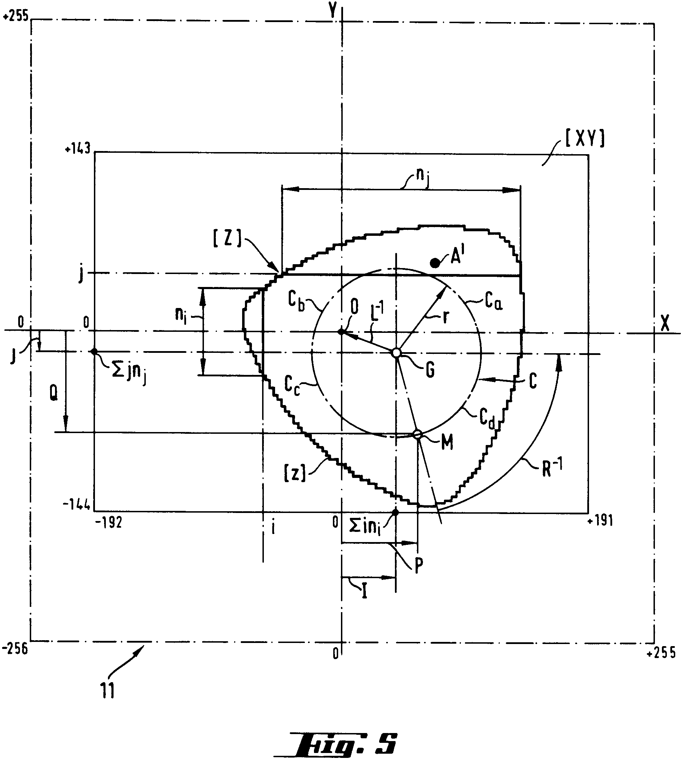

Pour ne pas en encombrer la lecture, la figure 4 donne, du fonctionnement prévu par l'invention, un schéma réduit à la circulation des informations obtenues à partir du signal Z issu du convertisseur 6, en liaison avec l'unité centrale 7 (CPU = central process unit) de la machine de contrôle.

Ici le signal Z n'est pas stocké directement dans la mémoire cible 8 pour alimenter l'analyseur 9, de principe connu en soi et qui n'a donc pas à être spécialement décrit, mais tout d'abord converti en un signal W par un dispositif électronique de conversion 10 que pilote également l'unité centrale 7 ; c'est pourquoi il est d'abord stocké en une quadruple image [Z] sur une matrice [XY] correspondant au dessin de la surface sensible, dans les quatre plans mémoires parallèles 11a, 11b, 11c, 11d d'une mémoire initiale 11 (RAM = random access memory de 1 M-octet).

Sommé sur l'ensemble de l'image, un histogramme des niveaux de gris fera systématiquement apparaître deux populations, celle des teintes très claires qui correspond au fond lumineux, celle des teintes plus foncées, susceptible de porter certains pics significatifs d'anomalies systématiques ou accidentelles, mais qui traduit en tout état de cause la présence de l'objet ; ceci permet de trouver un seuil s conduisant du signal Z à un signal z binaire noir (0) et blanc (1), qui fournira la silhouette [z] de l'objet, en l'occurrence celle du fond de la bouteille ou plus exactement son ombre chinoise : on peut noter ici que la présence des courroies n'apporte en pratique aucune gêne.

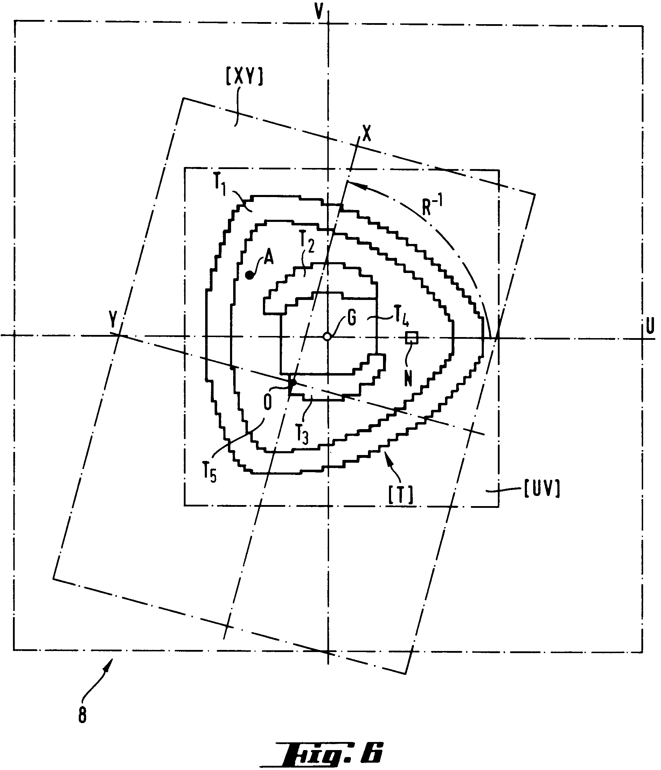

Travaillant en flot de données et apte à effectuer d'abord le traitement ci-dessus sur le signal reçu en $Z_1$ c'est l'unité de localisation 12 qui somme ensuite, ligne j après ligne j et colonne i par colonne i de la matrice [XY], selon le schéma de la figure 5, à partir du signal $Z_2$ réextrait de sa mémoire vidéo 12a, les quantités respectives $j.n_j$ et $i.n_i$, où $n_j$ et $n_i$ sont les nombres respectifs de noirs du signal z dans la ligne ou la colonne correspondante ; aux facteurs près des nombres de rangées de la matrice, les sommes I et J ainsi obtenues ne sont autres que les coordonnées du centre de gravité G de l'ombre, point indépendant du système de coordonnées choisi c'est-à-dire, dans le cas présent, de l'orientation de la bouteille sur son transporteur : inscrites dans une matrice [L], elles fourniront inversement la translation $L^{-1}$ à imposer à l'image pour amener ce centre au point origine choisi 0 d'une matrice cible [UV], en référence à laquelle se feront ensuite les calculs d'analyse d'image propres à caractériser la bouteille par rapport à l'image type [T]. On notera que, lors de cette phase opératoire, il est possible d'utiliser la mémoire 8, encore libre, en tant que mémoire 12a.

Il est à noter aussi que pour se fixer un centre on pourrait, sur un objet à double symétrie, remplacer la recherche du centre de gravité G par celle du point médian ; le calcul correspondant est plus simple mais ce gain compense mal la perte de souplesse qu'entraîne un tel choix.

Le renseignement ci-dessus est aussitôt transmis par l'unité centrale 7 à l'unité graphique 13, qui l'utilise pour autoriser dans la mémoire 11, le long du cercle C, centré sur G et de rayon r connu d'avance, en fait parallèlement dans les quatre plans 11a à 11d sur les quatre quadrants $C_a$ à $C_d$ (fonctions monotones), la lecture $Z_3$ par l'analyseur 9 du profil lumineux de l'image [Z] mise en mémoire ; l'analyseur y détectera un écart ou une séquence spécifiques d'intensité, caractéristiques d'un repère angulaire M préexistant ou spécifiquement prévu à cette fin sur le fond, en particulier une perle faisant loupe devant l'émetteur.

Dès l'identification des coordonnées P et Q de ce repère dans la matrice [XY], l'unité centrale 7 fournit les coefficients directeurs, cosinus et sinus, p = (P-I)/r et q = (Q-J)/r de la direction du point de repère : inscrits dans une matrice [R], ils détermineront à l'inverse la rotation $R^{-1}$ nécessaire pour amener son image sur l'un des axes du plan cible, l'axe des U par exemple.

Translation $L^{-1}$ puis rotation $R^{-1}$ de l'ensemble de l'image [Z] amèneraient celle-ci en regard de l'image type [T] d'un fond sans défaut pour permettre d'en effectuer l'analyse par toute méthode jugée convenable. En pratique l'algorithme voulu, en l'occurrence la matrice de déplacement [D], inverse du produit matriciel [L][R], permettra, selon le schéma de la figure 6, de remonter de la matrice [UV] à la matrice [XY] donc à l'image obtenue sur la caméra, pour déterminer à quels éléments de cette dernière correspond l'intensité de signal W qui caractérisera un pixel (U,V,W) de la matrice cible, ou mieux à quels pixels (X,Y,Z) de la matrice initiale se référer pour calculer W, et de quelle façon. On opère en coordonnées homogènes au moyen de matrices 3x3.

L'unité centrale 7 effectue le calcul de la matrice [D] et la transmet à l'unité de transposition 14 pour celui de W. Si l'on admet que W soit la représentation directe de l'éclairement de l'image, une méthode possible de détermination de la valeur à lui attribuer serait le report pur et simple de la valeur Z du pixel le plus proche, voire de celui correspondant aux valeurs entières par défaut de X′ et Y′ ; en effet les coordonnées X′ et Y′ du point initial correspondant à ce pixel cible ne seront qu'exceptionnellement des nombres entiers. Les circuits utilisés sont aptes à l'emploi de méthodes plus précises, mais elles sont plus complexes ; compte tenu des contraintes de temps, celle préférée sera celle, relativement simple, de l'interpolation bilinéaire entre les quatre pixels voisins, au prorata de l'inverse de leurs écarts de coordonnées.

Si l'on suppose qu'à un certain pixel A (U,V) de la matrice cible corresponde un point initial A′ ($X′ = X+x$, $Y′ = Y+y$) où X, Y représentent les parties entières des coordonnées, x et y leurs parties fractionnaires, ce point se trouve à l'intérieur du carré formé par les centres des quatre cases $(X,Y)$, $(X,Y+1)$, $(X+1,Y)$, $(X+1,Y+1)$ ; si les luminosités respectives de celles-ci sont $Z_{00}$, $Z_{01}$, $Z_{10}$, $Z_{11}$, il sera attribué à A′ donc à A une luminosité $Z′ = (1-x)(1-y) Z_{00} + (1-x)y Z_{01} + x(1-y) Z_{10} + xy Z_{11} = W$. A titre d'exemple arbitraire exposé en numération décimale, en supposant qu'au pixel A de la matrice cible corresponde, à l'intérieur du carré formé par les centres des quatre cases :

– ($X_0 = 8$, $Y_0 = -3$) de luminosité 137,
– ($X_0 = 8$, $Y_1 = -4$) de luminosité 145,
– ($X_1 = 9$, $Y_0 = -3$) de luminosité 123,
– ($X_1 = 9$, $Y_1 = -4$) de luminosité 111,

un point initial A′ de coordonnées $X′ = 8,37$ et $Y′ = -3,48$, il lui sera attribué des coefficients multiplicateurs respectifs : $k_x = 0,63$ et 0,37, $k_y = 0,52$ et 0,48, soit une luminosité W égale à : $Z′ = 0,63 \times 0,52 \times 137 + 0,63 \times 0,48 \times 145 + 0,37 \times 0,52 \times 123 + 0,37 \times 0,48 \times 111 = 132$.

Le calcul à effectuer consistera donc à rechercher case après case du domaine utile de la matrice cible les coordonnées du point initial, à partir de leurs parties entières les luminosités des quatre pixels initiaux qui l'encadrent et de leurs parties fractionnaires les quatre coefficients multiplicateurs, k, pour effectuer la sommation ci-dessus.

L'unité de transposition 14 comprend essentiellement ici deux circuits transposeurs de données 14x et 14y (IRS = Image resampling sequencer) effectuant ce calcul par une série d'itérations linéaires, et un multiplicateur-accumulateur 15 (MAC).

Objet après objet, l'unité centrale 7 calcule la matrice [D], dont les coefficients sont stockés dans les mémoires tampons de chacun des deux transposeurs 14x et 14y. Ceux-ci élaborent respectivement à partir de ces coefficients, pour chaque couple U,V du champ utile les valeurs X′ et Y′ ; ils sélectionnent leurs parties entières X et Y pour prélever en parallèle les quatre valeurs Z correspondantes dans les quatre plans de la mémoire initiale 11, et leurs parties fractionnaires x et y pour stocker les coefficients d'interpolation k correspondants dans une mémoire tampon 16. Le multiplicateur-accumulateur 15 effectue le calcul de $Z′ = W$ qu'il transfère dans la mémoire cible 8 dont les données serviront alors seulement à alimenter l'analyseur 9. Il est à noter que celui-ci pourrait extraire directement certaines de ses données des valeurs $Z_{00}$ ... $Z_{11}$ : ici encore on risquerait de perdre en souplesse d'utilisation.

Les principaux organes effectivement utilisés pour construire le dispositif ont été les suivants :
– unité centrale 7 : microprocesseur 68070 de Philips RTC,
– unité de localisation 12 : asics HISTO de Imapply International,
– unité graphique 13 : QPDM AM95C60 de Advanced Micro-Devices,
– transposeurs 14x et 14y : TMC 2301 de TRW,
– multiplicateur-accumulateur 15 : TMC 2210 de TRW.
– mémoires 8 et 11 : RAM de $2^9 \times 2^9$ cases (1 M-octet).

A l'intérieur d'une période de contrôle de 100 ms environ par exemple, un tel dispositif est aujourd'hui capable de recaler une image en moins de 15 ms soit moins de 20 % du temps de cycle, avec un rendu suffisant, sur la trame d'une mémoire matricielle de 512x512 cases, et même agrandir ou rétrécir l'image. Il est aussi à noter que sous certaines conditions de cadence ses organes, qui peuvent au demeurant être complétés de circuits auxiliaires, permettent d'affiner ou de compliquer le traitement de l'image [Z] comme l'expliquent leurs notices d'emploi : c'est ainsi que, dans le cas d'un contrôle des parois latérales, il est possible de donner de la paroi une image [W] développée en modifiant l'échelle de la seule coordonnée U. On pourrait même, par exemple pour le contrôle d'un fond piqué, mais avec adjonction d'une matrice de conversion, dilater de façon variable autour du point G les deux coordonnées U et V.

Eventuellement enfin certaines des unités décrites ci-dessus peuvent jouer pendant le reste du cycle des rôles différents en liaison avec l'unité centrale et les organes d'analyse d'image : c'est ainsi qu'il y a intérêt à utiliser en tant qu'unité graphique 13 celle destinée à piloter les traitements divers à effectuer sur l'image finale [W] dans les différentes zones de l'image type [T], zones mortes $T_1$, $T_2$, N, de lecture d'un code alphanumérique $T_3$, de recherche de défauts localisés F avec des sensibilités diverses $T_4$, $T_5$, de mesures d'épaisseur ...

**Revendications**

1. Machine de contrôle d'objets en mouvement sur un transporteur, asservie à un microcalculateur et associant le long du transporteur un dispositif optoélectronique comprenant un émetteur, et un récepteur fournissant et transcrivant en coordonnées cartésiennes rectangulaires une image instantanée ([S]) de chacun des objets, suivi d'un analyseur d'images, caractérisée en ce que, les objets étant munis d'un repère angulaire (M), elle est en outre équipée d'un convertisseur électronique (10) apte à restituer en position fixe devant la grille d'analyse cartésienne [T] de l'analyseur (9) l'image ([Z]) obtenue sur le récepteur (4) à partir de l'identification du centre (G) de l'image et de la position du repère.

2. Machine de contrôle optique selon la revendication 1, caractérisée en ce que ledit dispositif est apte à transformer l'image aussi bien en la déformant qu'en simple similitude.

3. Machine de contrôle optique selon la revendication 1, caractérisée en ce que la transformation se réduit à un déplacement bidimensionnel.

4. Machine selon l'une des revendications 1 à 3, pour contrôler le fond de récipients, comprenant sur un même axe vertical un émetteur lumineux (2) associé à une caméra matricielle (4).

5. Machine selon l'une des revendications 1 à 3, placée entre deux tronçons successifs (1a, 1b) d'un convoyeur à tablier horizontal (1), en regard d'un intervalle couvert par deux courroies latérales antagonistes (3) entraînant les récipients faiblement espacés.

6. Dispositif de conversion électronique pour une machine selon l'une des revendications 1 à 5, apte, par insertion entre le récepteur et la mémoire cible (8) qui alimente l'analyseur, à transposer en temps réel le signal fourni par le récepteur (4) puis numérisé, caractérisé en ce qu'il groupe, en liaison avec l'unité centrale de calcul (6) qui pilote la machine, une unité de localisation (12) déterminant le centre (G) de l'image observée, une unité graphique (13) autorisant l'analyseur à rechercher sur le profil lumineux que possède cette image le long d'une ligne de repérage déterminée de la matrice ([XY]), à partir des valeurs (Z) du signal stockées dans une mémoire auxiliaire initiale (11), une séquence caractéristique du repère (M), l'unité centrale (7) calculant alors l'algorithme de transformation ([D]) qui amènerait la grille [T] sur l'image ([S]), une unité de transposition (14) effectuant point par point la transformation et calculant par interpolation, à partir des valeurs initiales (Z), la valeur (W) de signal converti à affecter inversement aux cases successives (U,V) de la grille.

7. Dispositif de conversion selon la revendication 6, caractérisé en ce que l'unité de localisation (12) est apte à fournir l'histogramme des intensités du signal lumineux (Z), à élaborer à partir d'un seuil trouvé sur cet histogramme un signal binaire (z) fournissant l'ombre chinoise ([z]) de l'objet, à calculer à partir de la position du centre de celle-ci sur la matrice initiale ([XY]) la translation (L) à imposer à l'image ([S]) pour amener ce centre au point origine (0) choisi sur la mémoire cible.

8. Dispositif selon la revendication 7, caractérisé en ce que l'unité de localisation détermine la position du centre de l'image en calculant les coordonnées du centre de gravité de l'ombre ou éventuellement, sur un objet à double symétrie, celles de son point médian.

9. Dispositif selon la revendication 7, caractérisé en ce que, pour déterminer la rotation (R) à imposer à l'image, l'unité graphique autorise la recherche le long d'une ligne de repérage constituée des quatre quadrants d'un cercle (C) ayant pour centre celui de l'ombre ([z]).

10. Dispositif selon la revendication 6, caractérisé en ce que l'unité de transposition (14) comprend essentiellement deux transposeurs de données (14x, 14y) alimentant un multiplicateur-accumulateur (15).

11. Dispositif selon la revendication 10, caractérisé en ce que l'unité de transposition (14) fait élaborer la valeur (W) du signal converti, par son multiplicateur-accumulateur, case après case du domaine utile de la matrice cible ([UV]), par interpolation bilinéaire entre les intensités du signal (Z) propres aux quatre pixels voisins du point initial correspondant, à partir des parties entières (X,Y) et des parties fractionnaires (x,y) de ses coordonnées.

12. Dispositif selon la revendication 11, caractérisé en ce que la mémoire initiale (11) comprend plusieurs plans mémoires explorés en parallèle par les divers organes.

13. Dispositif selon l'une des revendications 9 à 12, caractérisé en ce que l'unité de transposition opère en coordonnées homogènes pour recaler l'image ([S]) sur la grille d'analyse (T) par itération au moyen d'une matrice [D] 3x3, inverse calculée par l'unité centrale (7) du produit des deux matrices de rotation ([R]) et de translation ([L]).

14. Dispositif selon la revendication 6, caractérisé en ce que son temps opératoire ne dépasse pas 20 % de la durée du cycle d'examen et qu'au cours de celui-ci, certaines unités (8, 13) sont utilisées tour à tour dans des rôles différents.

Fig. 1

Fig. 2

Fig. 3

Fig. 4

*Fig. 5*

**Fig. 6**

EP 0 487 402 A1

Office européen
des brevets

**RAPPORT DE RECHERCHE EUROPEENNE**

Numero de la demande

EP    91 40 3102
Page 1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| Y | WO-A-9 004 773 (INEX-VISTECH)<br>* page 9, ligne 1 - ligne 7 *<br>* page 9, ligne 14 - ligne 23 *<br>* page 18, ligne 29 - page 19, ligne 2 *<br>* figures 1,11 * | 1-3 | G01N21/90<br>G06F15/62 |
| A | --- | 5,14 | |
| Y | SYSTEMS & COMPUTERS IN JAPAN.<br>vol. 18, no. 1, Janvier 1987, NEW YORK US<br>pages 13 - 22;<br>K. UEDA ET AL: 'Method of pattern positioning for automatic verification of seal imprint'<br>* abrégé *<br>* page 15, colonne de droite, ligne 1 - page 16, colonne de droite, ligne 6 *<br>* figure 3 * | 1-3 | |
| A | --- | 6-9 | |
| A | 5ème Congrès:  Reconnaissance des Formes et Intelligence Artificielle, 27-29 Novembre 1985, Grenoble, Tome 1, pages 549-557<br>PH. KAJFASZ et al: 'Implantation materielle de transformations geometriques bidimensionelles d'images'<br>* page 550, alinéa 4 *<br>* page 553, dernier alinéa  *<br>* page 554, section III: Méthode d'implantation*<br>* page 555, ligne 4 - page 556, dernière ligne *<br>* page 557, alinéa 1 *<br>* figures 1,3,6,7 * | 1,3,6,<br>11-13 | |
| A | --- | | |
| A | EUSIPCO-88: Fourth European Signal Processing Conference, 5-8 Septembre 1988, Grenoble, FR, volume 1, pages 43-46<br>P. ASCHWANDEN: 'Real-time tracker with signal processor'<br>* page 44, alinéa 2 * | 1,6-8,14 | |
| | --- | | |
| | -/-- | | |

**DOMAINES TECHNIQUES RECHERCHES (Int. Cl.5 )**

G01N
G06F
G06K

Le présent rapport a été établi pour toutes les revendications

| Lieu de la recherche | Date d'achèvement de la recherche | Examinateur |
|---|---|---|
| LA HAYE | 17 FEVRIER 1992 | THOMAS R.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

.........................................................................
& : membre de la même famille, document correspondant

EPO FORM 1503 03.82 (P0402)

12

**Office européen des brevets**

# RAPPORT DE RECHERCHE EUROPEENNE

Numero de la demande

EP    91 40 3102
Page 2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | IEEE Computer Society Conference on Computer Vision and Pattern Recognition, 19-23 Juin 1985, San Francisco, California, US, pages 614-619 S.Y. LEE et al: 'Parallel image normalization' * page 614, colonne de gauche, dernier alinéa - colonne de droite, ligne 7 * * page 614, colonne de droite, ligne 31 - page 615, colonne de gauche, ligne 8 * * page 615, colonne de droite, ligne 9 - ligne 11 * | 1,2,13 | |
| A | EP-A-0 150 846 (KIRIN BEER) * abrégé * * page 8, ligne 37 - page 9, ligne 19 * * page 11, ligne 3 - ligne 8 * * figure 5 * | 1,3,6-8 | |
| A | FR-A-2 585 131 (OWENS-ILLINOIS) * page 4, ligne 27 - ligne 33 * * page 5, ligne 5 - ligne 8 * * page 5, ligne 31 - page 6, ligne 7 * * page 6, ligne 24 - page 7, ligne 11 * * page 7, ligne 29 - page 8, ligne 20 * * figure 1 * | 1 | DOMAINES TECHNIQUES RECHERCHES (Int. Cl.5) |
| A | PATENT ABSTRACTS OF JAPAN vol. 13, no. 279 (P-891)(3627) 27 Juin 1989 & JP-A-1 068 644 ( OMRON TATEISI ) 14 Mars 1989 * le document en entier * | 1,6-8 | |
| A | PATENT ABSTRACTS OF JAPAN vol. 9, no. 90 (P-350)(1813) 19 Avril 1985 & JP-A-59 218 939 ( MITSUBISHI ) 10 Décembre 1984 * le document en entier * | 1,5 | |

Le présent rapport a été établi pour toutes les revendications

| Lieu de la recherche | Date d'achèvement de la recherche | Examinateur |
|---|---|---|
| LA HAYE | 17 FEVRIER 1992 | THOMAS R.M. |